(19) **Europäisches Patentamt / European Patent Office / Office européen des brevets**

(11) **EP 2 191 884 B1**

(12) **EUROPEAN PATENT SPECIFICATION**

(45) Date of publication and mention
of the grant of the patent:
**26.06.2013 Bulletin 2013/26**

(21) Application number: **09177182.4**

(22) Date of filing: **26.11.2009**

(51) Int Cl.:
*B01D 53/94* (2006.01)     *B01J 21/04* (2006.01)
*B01J 23/50* (2006.01)     *B01J 37/04* (2006.01)
*B01J 37/08* (2006.01)     *B01J 37/14* (2006.01)
*B01J 37/18* (2006.01)     *B01J 35/00* (2006.01)
*B01J 37/02* (2006.01)

(54) **Method for preparing a silver oxydation catalyst**

Methode zur Herstellung eines Silber-Oxidationskatalysators

Methode pour la préparation d'un catalyseur d'oxydation de l'argent

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **26.11.2008 JP 2008301056**

(43) Date of publication of application:
**02.06.2010 Bulletin 2010/22**

(73) Proprietor: **Honda Motor Co., Ltd.
Tokyo 107-8556 (JP)**

(72) Inventors:
• **Dosaka, Kenji**
**Saitama 351-0193 (JP)**
• **Ishimaru, Shinya**
**Saitama 351-0193 (JP)**
• **Hashimoto, Masanori**
**Saitama 351-0193 (JP)**
• **Shimizu, Kenichi**
**AICHI 464-8601 (JP)**
• **Satsuma, Atsushi**
**AICHI 464-8601 (JP)**

(74) Representative: **Böhm, Brigitte et al
Weickmann & Weickmann
Patentanwälte
Postfach 86 08 20
81635 München (DE)**

(56) References cited:
WO-A1-2008/054564     DE-A1- 19 839 459
JP-A- 7 024 319       JP-A- 50 078 588
US-A- 4 994 588       US-A- 5 593 933
US-A- 5 977 012       US-A1- 2004 176 652
US-B1- 6 365 118

• SHIMIZU K-I ET AL: "Reductive activation of O2 with H2-reduced silver clusters as a key step in the H2-promoted selective catalytic reduction of NO with C3H8 over Ag/AI2O 3" JOURNAL OF PHYSICAL CHEMISTRY PART C: NANOMATERIALS ANDINTERFACES, AMERICAN CHEMICAL SOCIETY, US, vol. 111, no. 2, 18 January 2007 (2007-01-18), pages 950-959, XP008119750 [retrieved on 2006-11-18]

**Description**

CROSS REFERENCE TO RELATED APPLICATIONS

This application claims the foreign priority benefit under Title 35, United State Code, 119 (a)-(d) of Japanese Patent Application No. 2008-301056, filed on November 26, 2008 in the Japan Patent Office, the disclosure of which is herein incorporated by reference in its entirety.

BACKGROUND OF THE INVENTIION

FIELD OF THE INVENTION

The present invention relates to a silver oxidation catalyst.

DESCRIPTION OF RELATED ART

Exhaust gas discharged from automobiles includes nitrogen oxide ($NO_x$), unburnt hydrocarbon (HC), and carbon monoxide (CO), which are substances causing an environmental problem such as air pollution. It is an important object to decrease amounts of the contaminant substances including HC and CO. Herein, efforts to decrease the amounts of HC and CO have been made using a catalyst with a catalytic activity for oxidation, containing mainly noble metals such as platinum (Pt) and palladium (Pd).
Here, an oxidation catalyst containing mainly the above-mentioned noble metals, which is used in a diesel automobile traveling in a lean burn state, is called a diesel oxidation catalyst (DOC). DOC has been already manufactured and mounted on a number of diesel automobiles in the market. DOC is a catalyst comprising Pt and Pd supported on a metal oxide such as aluminum oxide (for example, alumina, $Al_2O_3$), which is disclosed in Japanese Laid-Open Patent Publication No. 2006-281127.
According to the technology disclosed in Japanese Laid-Open Patent Publication No. 2006-281127, CO and HC can be purified by an oxidation process that CO and HC are adsorbed on Pt and Pd, oxygen diffused in exhaust gas contacts to CO and HC, then CO and HC are oxidized. Here, noble metals such as Pt and Pd are widely used in the world since the noble metals have an advantage that a catalytic activity for oxidation of the noble metals at a low temperature is higher than the catalytic activity for oxidation of transition metals such as Fe and Cu.
However, DOC generally used has a problem with a high cost because expensive noble metals such as Pt and Pd are used as a catalytic active species. Further, a much more amount of noble metals is needed to be supported for the catalyst in order to address the world wide restriction of exhaust gas. This causes a significant problem of a more cost rise.
Catalysts comprising Ag as the active species are described in JP 50078588, US 5593933, US 4994588 and WO 2008/054564.

SUMMARY OF THE INVENTION

The present invention was accomplished in view of the foregoing problems. An object of the present invention is to provide a method for preparing a silver oxidation catalyst, which is used in place of a catalyst comprising noble metals such as Pt and Pd supported by a carrier.
In order to solve the above-mentioned problems, the present invention provides a method for preparing a silver oxidation catalyst comprising silver supported on alumina, which is formed by firing alumina and silver at 900-1100 °C in an oxygen containing atmosphere, most preferably air, which is followed by reduction treatment of the alumina and the silver at 100-500 °C.
Here, a precursor of the alumina of the silver oxidation catalyst is preferably boehmite.
Further, the alumina of the silver oxidation catalyst preferably includes a θ phase alumina.
Moreover, an amount of the silver supported on the alumina of the silver oxidation catalyst is in a range of 3 - 50 mass% for the mass of the silver oxidation catalyst.
According to the silver oxidation catalyst, which is formed by firing the alumina and the silver at 900-1100 °C in the air, followed by reduction treatment of the alumina and the silver, it is possible to obtain an oxidation catalyst having the same catalytic CO oxidation performance as Pt and Pd, even though silver (Ag), which is less expensive than such noble metals as Pt and Pd, is used in place of the noble metals.
According to the present invention, it is possible to provide a method for preparing the silver oxidation catalyst, which catalyst is used as an oxidation catalyst in place of a catalyst comprising noble metals such as Pt and Pd supported.

BRIEF DESCRIPTION OF THE DRAWINGS

FIG. 1 is a diagram showing a constitution of the silver oxidation catalyst of the present embodiment.

FIG. 2 is a diagram showing a CO oxidation mechanism of the silver oxidation catalyst.

FIG. 3 is a graphic diagram sowing CO conversion rates of the catalyst A of Example 1, the catalyst B of Example 2, the catalyst C of Example 3, the catalyst I of Comparative Example 1, and the catalyst J of Comparative Example 2, respectively.

FIG 4 is a diagram showing X-ray diffraction patterns of the catalyst A of Example 1 and the catalyst J of Comparative Example 2.

FIG. 5 is a diagram showing UV-VIS spectra of the catalyst A of Example 1, the catalyst C of Example 3, and the catalyst I of Comparative Example 1.

FIGS. 6 is a graphic diagram sowing CO conversion rates of the catalyst A of Example 1, the catalyst D of Example 4, the catalyst E of Example 5, the catalyst F of Example 6, the catalyst G of Example 7, the catalyst K of Comparative Example 3, and the catalyst L of Comparative Example 4, respectively.

FIG. 7 is a graphic diagram sowing CO conversion rates of the catalyst A of Example 1, the catalyst H of Example 8, the catalyst M of Comparative Example 5, and the catalyst N of Comparative Example 6, respectively.

FIG. 8 is a diagram showing X-ray diffraction patterns of $Al_2O_3$ fired at temperatures of 600 °C, 1000 °C, and 1100 °C.

FIG. 9 is a diagram showing a formation mechanism of the silver oxidation catalyst.

FIG. 10 is a graphic diagram sowing CO conversion rates of the catalyst A of Example 1, the catalyst O of Comparative Example 7, the catalyst P of Comparative Example 8, the catalyst Q of Comparative Example 9, the catalyst R of Comparative Example 10, and the catalyst S of Comparative Example 11, respectively.

DETAILED DESCRIPTION OF THE PREFERRED EMBODIMENT

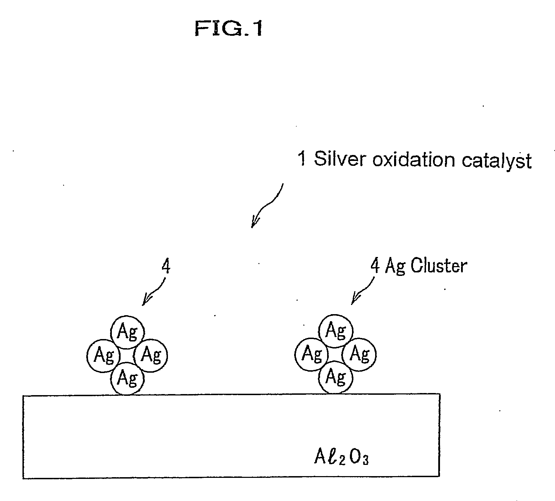

Next, an embodiment of the present invention will be explained in reference to FIGS. 1 to 10.

«Constitution of Silver Oxidation Catalyst»

A silver oxidation catalyst 1 of the present embodiment shown in FIG. 1 is a catalyst comprising silver (Ag) supported on alumina ($Al_2O_3$). The silver exists as an Ag cluster (4).

Herein, the cluster is a small group of atoms or molecules, in which a small amount of specific atoms or molecules bind together constituting a group in a mass of atoms or molecules with physical stability, and playing a unique role in the mass.

Here, the silver oxidation catalyst 1 is a catalyst, which is produced by firing $Al_2O_3$ and Ag at 900-1100 °C in the air, and reduction treatment of $Al_2O_3$ and Ag at 100-500 °C.

That is, a state of Ag atoms changes to an Ag cluster (4) by firing $Al_2O_3$ and Ag at 900-1100°C in the air, followed by reduction treatment at 100-500 °C.

Here, a precursor of $Al_2O_3$ of the silver oxidation catalyst 1 is preferably boehmite because a ratio of Ag atoms that work as a catalyst in the silver oxidation catalyst 1, increases if boehmite is used as a precursor of $Al_2O_3$.

Further, $Al_2O_3$ of the silver oxidation catalyst 1 preferably includes a θ phase alumina, and an amount of Ag supported by the alumina is in a range of 3 - 50 mass% for the mass of the silver oxidation catalyst.

Here, in the present embodiment, it has been described that the silver oxidation catalyst 1 is produced (or prepared) by firing $Al_2O_3$ and Ag at 900-1100 °C in the air, and the reduction treatment at 100-500 °C.

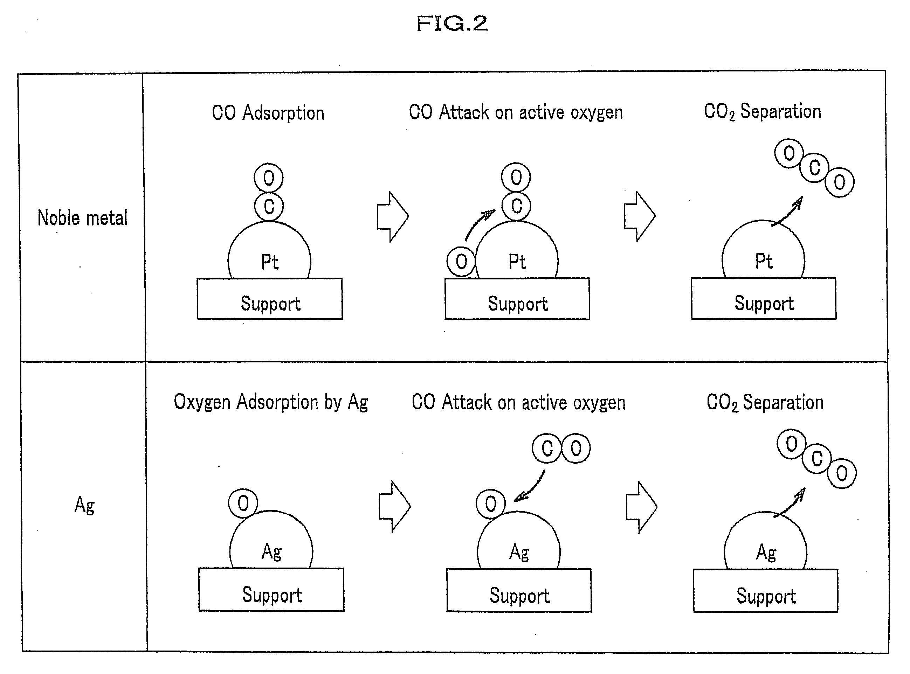

Next, an oxidation mechanism of carbon monoxide (CO) with the silver oxidation catalyst 1 will be explained in reference to FIG. 2.

«CO Oxidation Mechanism»

For a CO oxidation of a conventional catalyst including noble metals such as platinum (Pt), the oxidation reaction starts with adsorption of CO onto a noble metal. Therefore, the conventional catalyst including noble metals such as Pt has the higher catalytic activity, if Pt is dispersed as fine particles, in other words, if the particle size of the catalyst is small. In contrast, the catalyst loses the catalytic activity, if the particle size of the catalyst becomes too large.

Oxidation of CO on the silver oxidation catalyst 1 of the present invention progresses in the following way. Because it is difficult for Ag to adsorb CO, the oxidation reaction starts with adsorption of oxygen (for example, reactive oxygen species) onto a corner site. Then, CO is oxidized by a reaction that the adsorbed oxygen and CO are bound together (or react).

For the adsorption of the oxygen, an electron needs to be imparted to oxygen by an adsorbing atom. In the case of an Ag ion, the Ag ion can not be further oxidized (that is, can not impart an electron) and can not adsorb the oxygen.

In the case of an Ag metal, the number of the corner sites having a high activity decreases. Here, the corner sites and terrace sites are sites having the high activity based on the coordinate unsaturation property. Therefore, the Ag metal can not adsorb the oxygen.

In contrast, in the case of an Ag cluster (4), the number of the corner sites becomes maximum when a size of the Ag cluster (4) is a nanometer size, for example, as small as 1 nm. Accordingly, the Ag cluster (4) can adsorb the oxygen by imparting an electron to the oxygen.

Ag supported on a metal oxide carrier (referred to support) is dispersed as Ag ions to be small particles, under a high-temperature oxygen atmosphere, for example, in the air. In contrast, Ag supported on the metal oxide carrier is agglomerated together to be large particles, under a high-temperature reducing atmosphere, for example, under a hydrogen atmosphere. Accordingly, if Ag supported on the metal oxide carrier is under a lean atmosphere such as diesel exhaust gas (that is, an excess oxygen atmosphere), Ag is dispersed as Ag ions and has little CO oxidation activity.

However, Ag of the silver oxidation catalyst 1 of the present invention is not dispersed as Ag ions and can maintain an Ag cluster state even under the lean atmosphere. As a result, the silver oxidation catalyst 1 of the present invention can show a high CO oxidation activity under the lean atmosphere.

A silver oxidation catalyst comprising Ag supported on a metal oxide carrier has generally a high nitrogen oxide ($NO_x$) reduction performance since Ag is deposited on the carrier and dispersed as fine particles.

However, in the silver oxidation catalyst 1 fired at a high temperature in the air, Ag atoms are in a state of being prone to agglomerate together because a surface area of the carrier becomes smaller. Followed by the reduction treatment, Ag atoms agglomerate to form a cluster state.

As a result, Ag has a stronger catalytic oxidation property and a weaker catalytic reduction property, and shows a CO catalytic oxidation activity, which is attributed to a specific character of Ag.

EXAMPLES

Hereinafter, the present invention will be specifically explained in reference to examples and comparative examples as mentioned below.

Example 1

Preparation of Catalyst A

a) Ion-exchanged water 50 g was added to a mixture of boehmite (SASOL Ltd., PURAL SB-1) 10g and silver nitrate (Kishida Chemical Ltd.) 0.601 g. After impregnation at 70 °C for 0.5 h, the mixture was evaporated to dryness at 70 °C by a rotary evaporator, and was dehydrated in a drying oven at 100 °C for 24 h. Then, the resulting mixture was fired in a muffle furnace in the air at 1000 °C for 3 h, to yield a catalyst powder (5 mass% Ag/ $Al_2O_3$).

b) Through the above mentioned catalyst powder, 1% $H_2$/He gas was passed in an atmospheric fixed bed flow reactor at 300 °C for 1 min. The catalyst powder was cooled to ambient temperature, to yield a catalyst A.

Example 2

Preparation of Catalyst B

a) Ion-exchanged water 50 g was added to a mixture of boehmite (SASOL Ltd., PURAL SB-1) 10g and silver nitrate (Kishida Chemical Ltd.) 0.601 g. After impregnation at 70 °C for 0.5 h, the mixture was evaporated to dryness at 70 °C by a rotary evaporator, and was dehydrated in a drying oven at 100 °C for 24 h. Then, the resulting mixture was fired in a muffle furnace in the air at 1000 °C for 3 h, to yield a catalyst powder (5 mass% Ag/ $Al_2O_3$).

b) Through the above mentioned catalyst powder, 1% $H_2$/He gas was passed in an ambient pressure fixed bed flow reactor at 100 °C for 1 min. The catalyst powder was cooled to ambient temperature, to yield a catalyst B.

Example 3

Preparation of Catalyst C

a) Ion-exchanged water 50 g was added to a mixture of boehmite (SASOL Ltd., PURAL SB-1) 10g and silver nitrate (Kishida Chemical Ltd.) 0.601 g. After impregnation at 70 °C for 0.5 h, the mixture was evaporated to dryness at 70 °C by a rotary evaporator, and was dehydrated in a drying oven at 100 °C for 24 h. Then, the resulting mixture was fired in a muffle furnace in the air at 1000 °C for 3 h, to yield a catalyst powder (5 mass% Ag/ $Al_2O_3$) .
b) Through the above mentioned catalyst powder, 1% $H_2$/He gas was passed in an ambient pressure fixed bed flow reactor at 500 °C for 1 min. The catalyst powder was cooled to ambient temperature, to yield a catalyst C.

Example 4

Preparation of Catalyst D

a) Ion-exchanged water 50 g was added to a mixture of boehmite (SASOL Ltd., PURAL SB-1) 10g and silver nitrate (Kishida Chemical Ltd.) 0.361 g. After impregnation at 70 °C for 0.5 h, the mixture was evaporated to dryness at 70 °C by a rotary evaporator, and was dehydrated in a drying oven at 100 °C for 24 h. Then, the resulting mixture was fired in a muffle furnace in the air at 1000 °C for 3 h, to yield a catalyst powder (3 mass% Ag/ $Al_2O_3$) .
b) Through the above mentioned catalyst powder, 1% $H_2$/He gas was passed in an ambient pressure fixed bed flow reactor at 300 °C for 1 min. The catalyst powder was cooled to ambient temperature, to yield a catalyst D.

Example 5

Preparation of Catalyst E

a) Ion-exchanged water 50 g was added to a mixture of boehmite (SASOL Ltd., PURAL SB-1) 10g and silver nitrate (Kishida Chemical Ltd.) 1.202 g. After impregnation at 70 °C for 0.5 h, the mixture was evaporated to dryness at 70 °C by a rotary evaporator, and was dehydrated in a drying oven at 100 °C for 24 h. Then, the resulting mixture was fired in a muffle furnace in the air at 1000 °C for 3 h, to yield a catalyst powder (10 mass% Ag/ $Al_2O_3$) .
b) Through the above mentioned catalyst powder, 1% $H_2$/He gas was passed in an ambient pressure fixed bed flow reactor at 300 °C for 1 min. The catalyst powder was cooled to ambient temperature, to yield a catalyst E.

Example 6

Preparation of Catalyst F

a) Ion-exchanged water 50 g was added to a mixture of boehmite (SASOL Ltd., PURAL SB-1) 10g and silver nitrate (Kishida Chemical Ltd.) 2.404 g. After impregnation at 70 °C for 0.5 h, the mixture was evaporated to dryness at 70 °C by a rotary evaporator, and was dehydrated in a drying oven at 100 °C for 24 h. Then, the resulting mixture was fired in a muffle furnace in the air at 1000 °C for 3 h, to yield a catalyst powder (20 mass% Ag/ $Al_2O_3$) .
b) Through the above mentioned catalyst powder, 1% $H_2$/He gas was passed in an ambient pressure fixed bed flow reactor at 300 °C for 1 min. The catalyst powder was cooled to ambient temperature, to yield a catalyst F.

Example 7

Preparation of Catalyst G

a) Ion-exchanged water 50 g was added to a mixture of boehmite (SASOL Ltd., PURAL SB-1) 10g and silver nitrate (Kishida Chemical Ltd.) 6.013 g. After impregnation at 70 °C for 0.5 h, the mixture was evaporated to dryness at 70 °C by a rotary evaporator, and was dehydrated in a drying oven at 100 °C for 24 h. Then, the resulting mixture was fired in a muffle furnace in the air at 1000 °C for 3 h, to yield a catalyst powder (50 mass% Ag/ $Al_2O_3$) .

b) Through the above mentioned catalyst powder, 1% $H_2$/He gas was passed in an ambient pressure fixed bed flow reactor at 300 °C for 1 min. The catalyst powder was cooled to ambient temperature, to yield a catalyst G.

Example 8

Preparation of Catalyst H

a) Ion-exchanged water 50 g was added to a mixture of boehmite (SASOL Ltd., PURAL SB-1) 10g and silver nitrate (Kishida Chemical Ltd.) 0.601 g. After impregnation at 70 °C for 0.5 h, the mixture was evaporated to dryness at 70 °C by a rotary evaporator, and was dehydrated in a drying oven at 100 °C for 24 h. Then, the resulting mixture was fired in a muffle furnace in the air at 900 °C for 3 h, to yield a catalyst powder (5 mass% Ag/ $Al_2O_3$) .

b) Through the above mentioned catalyst powder, 1% H2/He gas was passed in an ambient pressure fixed bed flow reactor at 300 °C for 1 min. The catalyst powder was cooled to ambient temperature, to yield a catalyst H.

Comparative Example 1

Preparation of Catalyst I

a) Ion-exchanged water 50 g was added to a mixture of boehmite (SASOL Ltd., PURAL SB-1) 10g and silver nitrate (Kishida Chemical Ltd.) 2.404 g. After impregnation at 70 °C for 0.5 h, the mixture was evaporated to dryness at 70 °C by a rotary evaporator, and was dehydrated in a drying oven at 100 °C for 24 h. Then, the resulting mixture was fired in a muffle furnace in the air at 1000 °C for 3 h, to yield a catalyst powder (20 mass% Ag/ $Al_2O_3$) .

b) A reduction treatment by hydrogen was not conducted.

Comparative Example 2

Preparation of Catalyst J

a) Ion-exchanged water 50 g was added to a mixture of boehmite (SASOL Ltd., PURAL SB-1) log and silver nitrate (Kishida Chemical Ltd.) 0.601 g. After impregnation at 70 °C for 0.5 h, the mixture was evaporated to dryness at 70 °C by a rotary evaporator, and was dehydrated in a drying oven at 100°C for 24 h. Then, the resulting mixture was fired in a muffle furnace in the air at 1000 °C for 3 h, to yield a catalyst powder (5 mass% Ag/ $Al_2O_3$).

b) Through the above mentioned catalyst powder, 1% $H_2$/He gas was passed in an ambient pressure fixed bed flow reactor at 900°C for 1 min. The catalyst powder was cooled to ambient temperature, to yield a catalyst J.

Comparative Example 3

Preparation of Catalyst K

a) Ion-exchanged water 50 g was added to a mixture of boehmite (SASOL Ltd., PURAL SB-1) log and silver nitrate (Kishida Chemical Ltd.) 0.120 g. After impregnation at 70 °C for 0.5 h, the mixture was evaporated to dryness at 70 °C by a rotary evaporator, and was dehydrated in a drying oven at 100 °C for 24 h. Then, the resulting mixture was fired in a muffle furnace in the air at 1000 °C for 3 h, to yield a catalyst powder (1 mass% Ag/ $Al_2O_3$) -

b) Through the above mentioned catalyst powder, 1% $H_2$/He gas was passed in an ambient pressure fixed bed flow reactor at 300 °C for 1 min. The catalyst powder was cooled to ambient temperature, to yield a catalyst K.

Comparative Example 4

Preparation of Catalyst L

a) Ion-exchanged water 50 g was added to a mixture of boehmite (SASOL Ltd., PURAL SB-1) log and silver nitrate (Kishida Chemical Ltd.) 7.212 g. After impregnation at 70 °C for 0.5 h, the mixture was evaporated to dryness at 70 °C by a rotary evaporator, and was dehydrated in a drying oven at 100 °C for 24 h. Then, the resulting mixture was fired in a muffle furnace in the air at 1000 °C for 3 h, to yield a catalyst powder (60 mass% Ag/ $Al_2O_3$)
b) Through the above mentioned catalyst powder, 1% $H_2$/He gas was passed in an ambient pressure fixed bed flow reactor at 300 °C for 1 min. The catalyst powder was cooled to ambient temperature, to yield a catalyst L.

Comparative Example 5

Preparation of Catalyst M

a) Ion-exchanged water 50 g was added to a mixture of boehmite (SASOL Ltd., PURAL SB-1) 10g and silver nitrate (Kishida Chemical Ltd.) 0.601 g. After impregnation at 70 °C for 0.5 h, the mixture was evaporated to dryness at 70 °C by a rotary evaporator, and was dehydrated in a drying oven at 100 °C for 24 h. Then, the resulting mixture was fired in a muffle furnace in the air at 600 °C for 3 h, to yield a catalyst powder (5 mass% Ag/ $Al_2O_3$) .
b) Through the above mentioned catalyst powder, 1% $H_2$/He gas was passed in an ambient pressure fixed bed flow reactor at 300 °C for 1 min. The catalyst powder was cooled to ambient temperature, to yield a catalyst M.

Comparative Example 6

Preparation of Catalyst N

a) Ion-exchanged water 50 g was added to a mixture of boehmite (SASOL Ltd., PURAL SB-1) 10g and silver nitrate (Kishida Chemical Ltd.) 0.601 g. After impregnation at 70 °C for 0.5 h, the mixture was evaporated to dryness at 70 °C by a rotary evaporator, and was dehydrated in a drying oven at 100 °C for 24 h. Then, the resulting mixture was fired in a muffle furnace in the air at 1300 °C for 3 h, to yield a catalyst powder (5 mass% Ag/ $Al_2O_3$) .
b) Through the above mentioned catalyst powder, 1% $H_2$/He gas was passed in an ambient pressure fixed bed flow reactor at 300 °C for 1 min. The catalyst powder was cooled to ambient temperature, to yield a catalyst N.

Comparative Example 7

Preparation of Catalyst O

a) Ion-exchanged water 50 g was added to a mixture of Zr02 (Daiich Rare Element Chemical Ltd.) 10g and silver nitrate (Kishida Chemical Ltd.) 0.785 g. After impregnation at 70 °C for 0.5 h, the mixture was evaporated to dryness at 70 °C by a rotary evaporator, and was dehydrated in a drying oven at 100° C for 24 h. Then, the resulting mixture was fired in a muffle furnace in the air at 1000 °C for 3 h, to yield a catalyst powder (5 mass% Ag/ZrO2).
b) Through the above mentioned catalyst powder, 1% $H_2$/He gas was passed in an ambient pressure fixed bed flow reactor at 300 °C for 1 min. The catalyst powder was cooled to ambient temperature, to yield a catalyst O.

Comparative Example 8

Preparation of Catalyst P

a) Ion-exchanged water 50 g was added to a mixture of Ce02 (JRC-CEO-1) 10g and silver nitrate (Kishida Chemical Ltd.) 0.785 g. After impregnation at 70 °C for 0.5 h, the mixture was evaporated to dryness at 70 °C by a rotary evaporator, and was dehydrated in a drying oven at 100 °C for 24 h. Then, the resulting mixture was fired in a muffle furnace in the air at 1000 °C for 3 h, to yield a catalyst powder (5 mass% Ag/Ce02).
b) Through the above mentioned catalyst powder, 1% $H_2$/He gas was passed in an ambient pressure fixed bed flow reactor at 300 °C for 1 min. The catalyst powder was cooled to ambient temperature, to yield a catalyst P.

Comparative Example 9

Preparation of Catalyst Q

a) Ion-exchanged water 50 g was added to a mixture of $SiO_2$ (Q-15Fuji Silysia Chemical Ltd.) 10g and silver nitrate (Kishida Chemical Ltd.) 0.785 g. After impregnation at 70 °C for 0.5 h, the mixture was evaporated to dryness at 70 °C by a rotary evaporator, and was dehydrated in a drying oven at 100 °C for 24 h. Then, the resulting mixture was fired in a muffle furnace in the air at 1000 °C for 3 h, to yield a catalyst powder (5 mass% Ag/ $SiO_2$) .
b) Through the above mentioned catalyst powder, 1% $H_2$/He gas was passed in an ambient pressure fixed bed flow reactor at 300 °C for 1 min. The catalyst powder was cooled to ambient temperature, to yield a catalyst Q.

Comparative Example 10

Preparation of Catalyst R

a) Ion-exchanged water 50 g was added to a mixture of MgO (JRC-MGO-1) 10g and silver nitrate (Kishida Chemical Ltd.) 0.785 g. After impregnation at 70 °C for 0.5 h, the mixture was evaporated to dryness at 70 °C by a rotary evaporator, and was dehydrated in a drying oven at 100 °C for 24 h. Then, the resulting mixture was fired in a muffle furnace in the air at 1000 °C for 3 h, to yield a catalyst powder (5 mass% Ag/MgO) .
b) Through the above mentioned catalyst powder, 1% H2/He gas was passed in an ambient pressure fixed bed flow reactor at 300 °C for 1 min. The catalyst powder was cooled to ambient temperature, to yield a catalyst R.

Comparative Example 11

Preparation of Catalyst S

a) Ion-exchanged water 50 g was added to a mixture of Y-type zeolite (JRC-Z-HY) 10g and silver nitrate (Kishida Chemical Ltd.) 0.785 g. After impregnation at 70 °C for 0.5 h, the mixture was evaporated to dryness at 70 °C by a rotary evaporator, and was dehydrated in a drying oven at 100 °C for 24 h. Then, the resulting mixture was fired in a muffle furnace in the air at 1000 °C for 3 h, to yield a catalyst powder (5 mass% Ag /Y-type zeolite).
b) Through the above mentioned catalyst powder, 1% $H_2$/He gas was passed in an ambient pressure fixed bed flow reactor at 300 °C for 1 min. The catalyst powder was cooled to ambient temperature, to yield a catalyst S.

[Method and Condition of Performance Evaluation Test]

An ambient pressure fixed bed flow reactor was used for a performance evaluation test of catalysts. Each catalyst, which was cooled to ambient temperature, was placed in a U-tube (Pyrex, trade mark) and heated to 100 °C. Then, a CO oxidation performance of the catalyst was evaluated by letting a model gas shown in Table 1 pass through the catalyst. Herein, the CO oxidation performance was shown as a CO conversion rate, which was calculated by the following formula (1).

Table 1

| Gas | Concentration |
|---|---|
| CO | 0.4% |
| O2 | 10% |
| He | Bal. |

Gas flow rate: 100 ml/min
Amount of catalyst: 0.03 g

CO conversion rate:

$$A_{CO} = (C_{CO\ in} - C_{CO\ out}) / C_{CO\ in} \times 100 \qquad (1)$$

$C_{CO\ in}$ : CO concentration at the inlet of the reactor
$C_{CO\ out}$ : CO concentration at the outlet of the reactor

Hereinafter, measurement results of the CO conversion rates of the catalysts A to S in Examples 1 to 8 and Comparative Examples 1 to 11 will be explained.

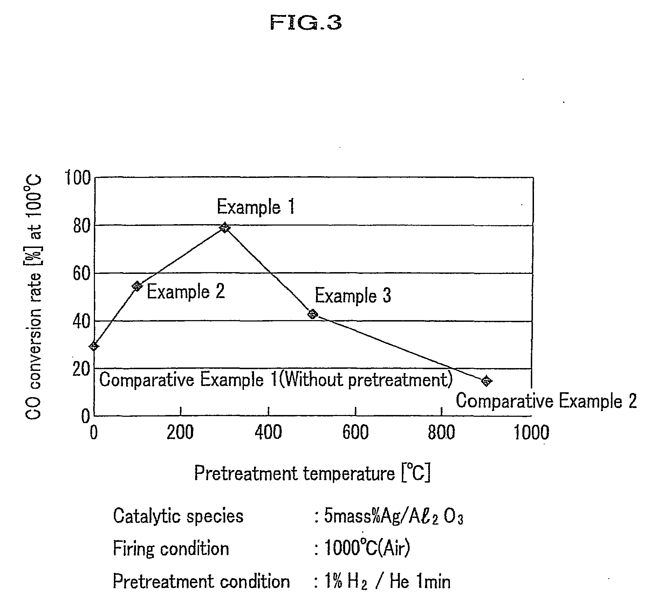

FIG. 3 shows CO conversion rates of the catalysts in Example 1 (catalyst A), Example 2 (catalyst B), Example 3 (catalyst C), Comparative Example 1 (catalyst I), and Comparative Example 2 (catalyst J) .

As shown in FIG. 3, the CO conversion rates were high when a temperature of a reduction treatment (pretreatment temperature) was in a rage of 100 - 500 °C.

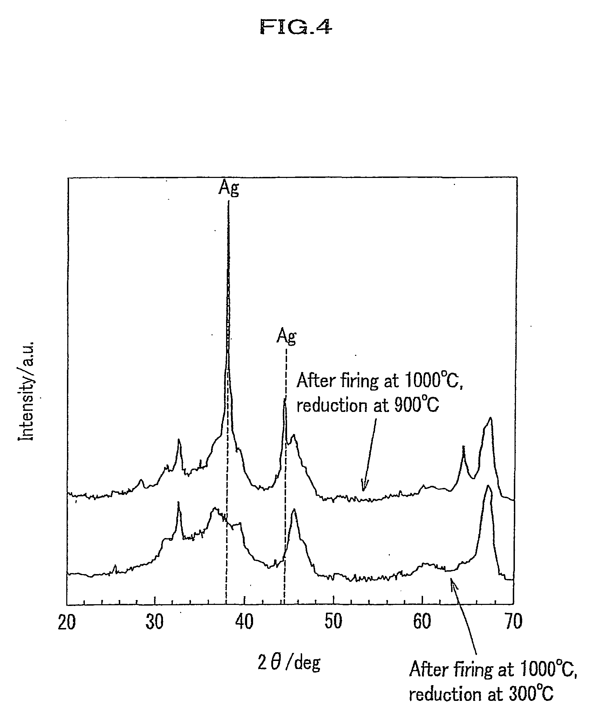

FIG. 4 shows X-ray diffraction patterns of the catalyst A of Example 1 and the catalyst J of Comparative Example 2, respectively.

The XRD measurement was made using a Rigaku X-ray diffractometer (Rigaku Denki, Ltd., Rint 1200) under the following conditions.

<Measurement Conditions>

X-ray source: Cu, voltage: 30 kv, current: 15 mA, goniometer: wide angle goniometer, sampling width: 0.020°, scanning speed: 2.000°/min, scanning axis: 2θ/θ, filter: Ni, integration times: 1.

As shown in FIG. 4, after a reduction treatment at 900 °C (Comparative Example 2), Ag peaks were observed, indicating that Ag was metallized. On the other hand, after a reduction treatment at 300 °C (Example 1), no Ag peak was observed, indicating that Ag was not metallized.

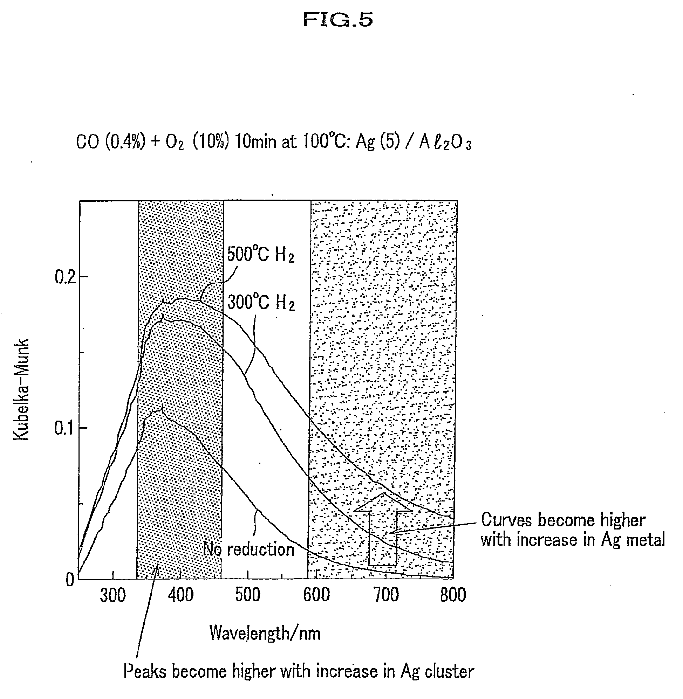

FIG. 5 shows UV-VIS spectra of the catalyst A of Example 1, the catalyst C of Example 3 and the catalyst I of Comparative Example 1, respectively.

The diffuse reflectance UV-VIS measurement was made using a UV-VIS analyzer (JASCO, JASCO/V-570) with an in situ cell (JASCO, VHR-630) under the following conditions.

<Measurement Conditions>

In the diffuse reflectance UV-VIS measurement, the catalyst (0.05g) was placed in the in-situ cell, and spectra were measured at 100 °C under the flow (100 ml/min) of the same gas as listed in Table 1.

(1) The catalyst was pretreated with 10% $[O_2]$ in He at 600 °C for 30 min.
(2) The temperature was decreased to 100 °C reduction pretreatment temperature, and a background spectrum was measured.
(3) The temperature was increased to the reduction pretreatment temperature in He, and the catalyst was treated with 1% $[H_2]$ for 1 min.
(4) The temperature was decreased to 100 °C reduction temperature in 1% $[H_2]$. Then, 1%$[H_2]$ was changed to He and a flow of He was continued for 5 min.
(5) He was changed to 0.4% (4000ppm) [CO] and 10% [02]. After 10 min, the UV-VIS spectrum was measured.

(6) A differential spectrum between the above UV-VIS spectrum and the background spectrum measured at (2) was calculated.

As shown in FIG. 5, spectra of the catalysts after a reduction treatment at 300 °C (Example 1) and 500 °C (Example 3), have higher Ag peaks than a spectrum of the catalyst without the reduction treatment (Comparative Example 1). This result indicates that an amount of an Ag cluster in the catalyst with the reduction treatment at 300 °C and 500 °C is larger than an amount of the Ag cluster in the catalyst without the reduction treatment.

Further, a peak of an Ag metal in the catalyst with the reduction treatment at 500 °C is higher than a peak of the Ag metal in the catalyst with the reduction treatment at 300 °C. This result indicates that an amount of the Ag metal in the catalyst with the reduction treatment at 500 °C is larger than an amount of the Ag metal in the catalyst with the reduction treatment at 300 °C .

The above mentioned results show the necessity of the reduction treatment. Further, the results show that the CO oxidation performance is decreased with an increase in the amount of the Ag metal, if the reduction treatment temperature is too high.

<Basis for Reducing by Hydrogen and Reduction Treatment Temperature >

Reduction by hydrogen is needed so as to change a state of Ag from a dispersed state to an agglomerated state, that is, to an Ag cluster state. With respect to the reduction treatment temperature, the Ag cluster is not formed when the temperature is too low. On the other hand, when the temperature is too high, the Ag cluster can not be maintained and is reduced to the Ag metal. When the temperature is 300 °C, a cluster state of Ag is increased to be maximum.

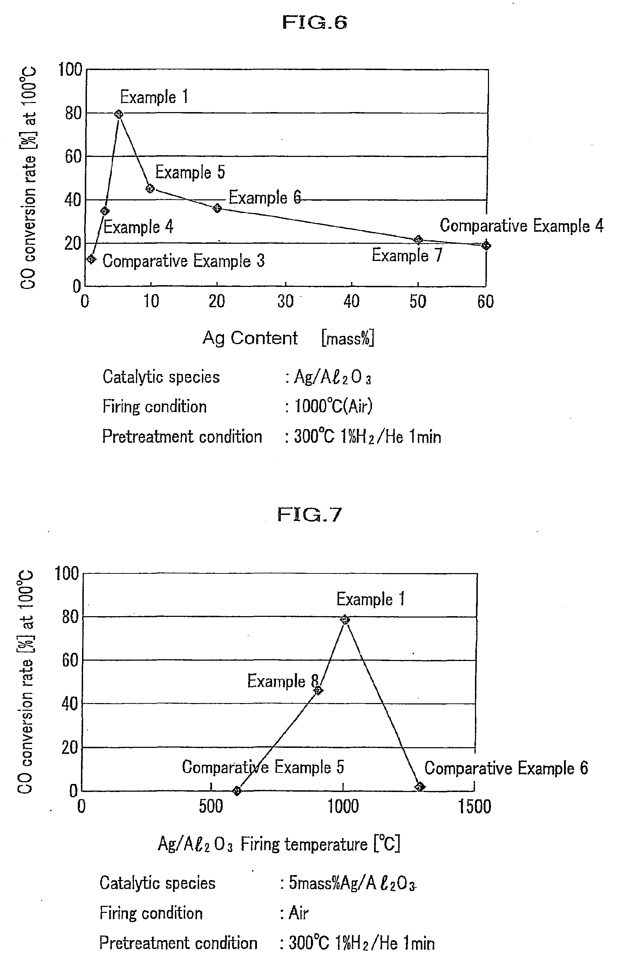

FIG. 6 shows CO conversion rates of the catalyst A of Example 1, the catalyst D of Example 4, the catalyst E of Example 5, the catalyst F of Example 6, the catalyst G of Example 7, the catalyst K of Comparative Example 3, and the catalyst L of Comparative Example 4, respectively.

As shown in FIG. 6, high CO conversion rates are achieved when an amount of Ag (supported amount of Ag) is in a range of 3 to 50 mass% for the mass of the silver oxidation catalyst.

«Amount of Ag»

When the amount of Ag is too small, the Ag cluster can not be formed since all of Ag is fixed as Ag ions. On the other hand, when the amount of Ag is too large, not only a cluster state but also a metal state of Ag is increased since a surface area is decreased in accordance with a decrease in a rate of $Al_2O_3$ amount.

FIG. 7 shows CO conversion rates of the catalyst A of Example 1, the catalyst H of Example 8, the catalyst M of Comparative Example 5, and the catalyst N of Comparative Example 6, respectively.

As shown in FIG. 7, high CO conversion rates are achieved when the firing temperature of $Al_2O_3$ and Ag is in a range of 900 - 1100 °C.

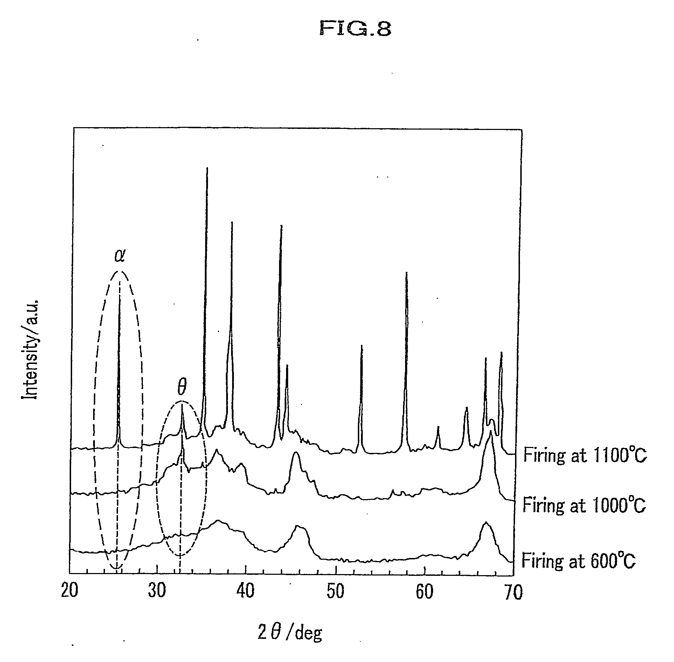

FIG. 8 shows XRD patterns of $Al_2O_3$ for the firing temperatures of 600 °C, 1000 °C, and 1100 °C, respectively.

The XRD measurement was made using a Rigaku X-ray diffractometer (Rigaku Denki, Ltd., Rint 1200) under the following conditions.

<Measurement Conditions>

X-ray source: Cu, voltage: 30 kv, current: 15 mA, goniometer: wide angle goniometer, sampling width: 0.020°, scanning speed: 2.000°/min, scanning axis: $2\theta/\theta$, filter: Ni, integration times: 1.

As shown in FIG. 8, no $\theta$ phase ($\theta$ phase alumina) is observed for the firing of $Al_2O_3$ at 600 °C. For the firing of $Al_2O_3$ at 1000 °C, a $\theta$ phase is observed, while no $\alpha$ phase ($\alpha$ phase alumina) is observed. For the firing of $Al_2O_3$ at 1100 °C, both $\theta$ and $\alpha$ phases are observed, indicating that a change to the $\alpha$ phase proceeds.

Therefore, a high conversion rate is achieved when $Al_2O_3$ includes a $\theta$ phase alumina.

<Basis for Conducting Firing at 900-1100 °C >

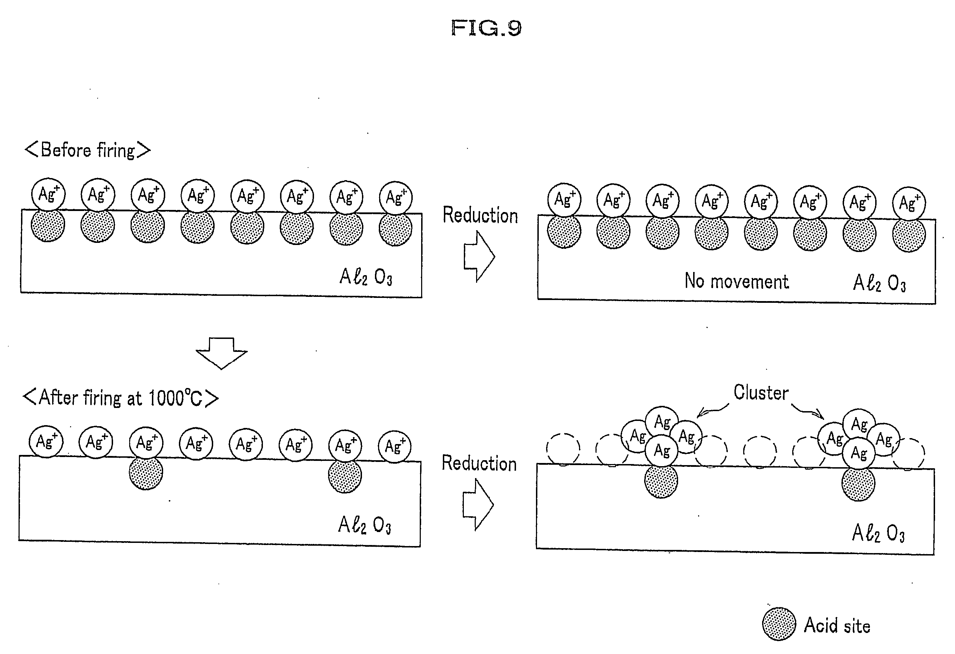

The firing is conduced at 900-1100 °C so as to decrease an amount of acid sites of $Al_2O_3$. When there are too many acid sites, Ag can not become an Ag cluster by the reduction treatment. Herein, Ag is not agglomerated (that is, not moved) and remains as an ionic sate. FIG. 9 shows the mechanism. That is, by the reduction treatment with hydrogen, Ag in the ionic state changes to Ag in the cluster sate which is most suitable for the CO oxidation, by using the acid site of $Al_2O_3$ as an anchor.

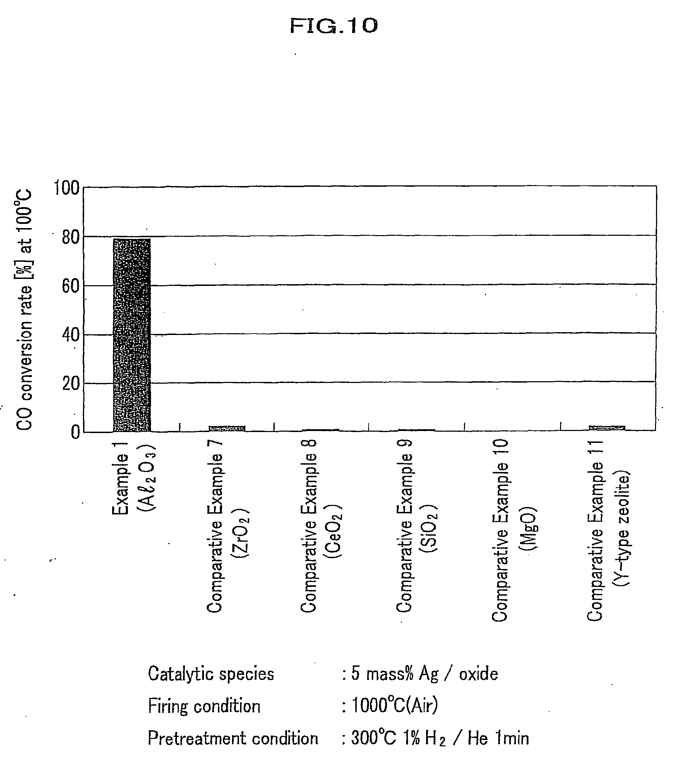

FIG. 10 shows CO conversion rates of the catalyst A of Example 1, the catalyst O of Comparative Example 7, the catalyst P of Comparative Example 8, the catalyst Q of Comparative Example 9, the catalyst R of Comparative Example 10, and the catalyst S of Comparative Example 11, respectively.

As shown in FIG. 10, high CO conversion rates are achieved when a carrier is $Al_2O_3$.

<Basis for Using $Al_2O_3$. Carrier>>

When a surface area of the carrier is small, an ionic state or a cluster state of Ag can not be maintained. Further, if there are no acid sites for the carrier, the cluster state of Ag can not be maintained when a reduction by hydrogen is treated. With respect to other acidic carriers such as zeolite, acid sites of the carrier are lost at 900 - 1100 °C. As a result, Ag is agglomerated to be an Ag metal when such acidic carriers are used. Therefore, the most preferable carrier is $Al_2O_3$. which has the largest surface area and the largest number of the acid sites even at a high temperature of 900 - 1100 °C.

A method for preparing a silver oxidation catalyst 1, which can be used in place of a catalyst comprising noble metals such as Pt and Pd supported, is provided. The silver oxidation catalyst 1 comprising silver supported on alumina, is formed by firing silver and alumina at 900 °C - 1100°C in the air, and reducing the silver and the alumina at 100 °C - 500 °C. A precursor of the alumina of the silver oxidation catalyst 1 is preferably boehmite. The alumina of the silver oxidation catalyst 1 preferably includes a 8 phase alumina. An amount of the silver of the silver oxidation catalyst 1 is in a range of 3 - 50 mass% for the mass of the silver oxidation catalyst.

## Claims

1. A method for preparing a silver oxidation catalyst comprising silver supported on alumina, wherein the silver oxidation catalyst is formed by firing the silver and the alumina at 900°C - 1100°C in the air, and subsequently reducing the silver and the alumina at 100°C - 500°C, and wherein an amount of the silver supported is in a range of 3 - 50 mass% for the mass of the silver oxidation catalyst.

2. The method according to claim 1, wherein a precursor of the alumina is boehmite.

3. The method according to claim 1 or claim 2, wherein the alumina includes a θ phase alumina.

## Patentansprüche

1. Verfahren zur Herstellung eines Silber-Oxidationskatalysators umfassend Silber geträgert auf Aluminiumoxid wobei der Silber-Oxidationskatalysator durch Brennen des Silbers und des Aluminiumoxids bei 900 °C - 1100 °C, an der Luft und durch nachfolgendes Reduzieren des Silbers und des Aluminiumoxids bei 100 °C - 500 °C gebildet wird, und wobei eine Menge des geträgerten Silbers in einem Bereich von 3 - 50 Masse -% bezogen auf die Masse des Silber-Oxidationskatalysators, liegt.

2. Verfahren nach Anspruch 1, wobei der Vorläufer des Aluminiumoxids Boehmit ist.

3. Verfahren nach Anspruch 1 oder Anspruch 2, wobei das Aluminiumoxid ein θ Phasen-Aluminiumoxid umfasst.

## Revendications

1. Procédé pour préparer un catalyseur d'oxydation de l'argent comprenant de l'argent supporté sur de l'alumine, dans lequel le catalyseur d'oxydation de l'argent est formé par fusion de l'argent et de l'alumine à 900 °C - 1100 °C à l'air, et ensuite en réduisant l'argent et l'alumine à 100 °C - 500 °C, et dans lequel une quantité d'argent supportée se situe dans une gamme de 3 - 50 % en masse par rapport à la masse du catalyseur d'oxydation de l'argent.

2. Procédé selon la revendication 1, dans lequel le précurseur de l'alumine est la boehmite.

3. Procédé selon la revendication 1 ou la revendication 2, dans lequel l'alumine comprend une alumine de phase θ.

# FIG.1

1 Silver oxidation catalyst

4

4 Ag Cluster

# FIG.2

| | | | |
|---|---|---|---|
| Noble metal | CO Adsorption | CO Attack on active oxygen | CO$_2$ Separation |
| Ag | Oxygen Adsorption by Ag | CO Attack on active oxygen | CO$_2$ Separation |

FIG.3

Catalytic species    : 5mass%Ag/Aℓ₂O₃
Firing condition     : 1000°C(Air)
Pretreatment condition  : 1% H₂ / He 1min

FIG.4

FIG.5

CO (0.4%) + $O_2$ (10%) 10min at 100°C: Ag (5) / A$\ell_2O_3$

Curves become higher with increase in Ag metal

Peaks become higher with increase in Ag cluster

## FIG.6

Catalytic species        : Ag/A$\ell_2$O$_3$
Firing condition        : 1000°C(Air)
Pretreatment condition   : 300°C 1%H$_2$/He 1min

## FIG.7

Catalytic species        : 5mass%Ag/A$\ell_2$O$_3$
Firing condition        : Air
Pretreatment condition   : 300°C 1%H$_2$/He 1min

FIG.8

# FIG.9

<Before firing>

Ag+ Ag+ Ag+ Ag+ Ag+ Ag+ Ag+ Ag+

Aℓ₂ O₃

Reduction ⟹

Ag+ Ag+ Ag+ Ag+ Ag+ Ag+ Ag+ Ag+

No movement    Aℓ₂ O₃

⟱

<After firing at 1000°C>

Ag+ Ag+ Ag+ Ag+ Ag+ Ag+ Ag+ Ag+

Aℓ₂ O₃

Reduction ⟹

Cluster

Ag Ag Ag    Ag Ag Ag
Ag          Ag

Aℓ₂ O₃

⬤ Acid site

FIG.10

Catalytic species      : 5 mass% Ag / oxide
Firing condition       : 1000°C(Air)
Pretreatment condition : 300°C 1% H₂ / He 1min

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008301056 A
- JP 2006281127 A
- JP 50078588 B
- US 5593933 A
- US 4994588 A
- WO 2008054564 A